# EUROPÄISCHE PATENTSCHRIFT

(11) **EP 3 804 497 B1**
(45) Veröffentlichungstag und Bekanntmachung des Hinweises auf die Patenterteilung: **03.04.2024**
(21) Anmeldenummer: 20201063.3
(22) Anmeldetag: 09.10.2020
(51) Int. Cl.: A01D 57/20, A01D 84/00

(54) **SCHWADER SOWIE VERFAHREN ZUM STEUERN EINES SOLCHEN SCHWADERS**
WINDROWER AND METHOD FOR CONTROLLING SUCH A WINDROWER
ANDAINEUSE AINSI QUE PROCÉDÉ DE COMMANDE D'UNE TELLE ANDAINEUSE

(30) Priorität: 11.10.2019 DE 102019127447
(43) Veröffentlichungstag der Anmeldung: 14.04.2021
(73) Patentinhaber: PÖTTINGER Landtechnik GmbH, 4710 Grieskirchen (AT)
(72) Erfinder: Mair, Andreas, 4710 Grieskirchen (AT)
(74) Vertreter: Thoma, Michael

(56) Entgegenhaltungen:
- EP-B1- 2 520 156
- EP-B1- 3 251 484
- DE-A1-102010 046 938
- US-A1- 2004 200 203
- US-B1- 6 971 225

## Beschreibung

Die vorliegende Erfindung betrifft einen Schwader in Form eines Mergers zum Schwaden von landwirtschaftlichem Erntegut, mit zumindest einer Schwadeinheit umfassend eine Aufnahmevorrichtung zum Aufnehmen des Ernteguts vom Boden sowie Fördermittel mit einem Querförderer zum Querversetzen des von der Aufnahmevorrichtung übergebenen Ernteguts, einen Fördermittelantrieb zum Antreiben der Fördermittel, einer Aushubvorrichtung zum Ausheben zumindest der Aufnahmevorrichtung der Schwadeinheit in eine Vorgewende- und/oder Transportstellung, sowie einer Steuervorrichtung zum Steuern des Fördermittelantriebs und der Aushubvorrichtung. Die Erfindung betrifft ferner auch ein Verfahren zum Steuern eines solchen Schwaders.

Beim Bearbeiten eines landwirtschaftlichen Felds mit einem Schwader ist es üblich, zuerst das Vorgewende zu bearbeiten, um an den Rändern des Feldes bzw. außen um den Zentralbereich rundherum Platz zu schaffen, damit später die Wendevorgänge zwischen einzelnen Fahr- bzw. Schwadgassen möglichst schonend erledigt werden können, ohne das liegende Erntegut zu überfahren. Dabei müssen die Erntegutzeilen möglichst gut aufnehmbar für das Folgefahrzeug abgelegt werden, damit auch das Folgefahrzeug die Erntegutschwade aufnehmen kann, ohne andere Schwade zu überfahren.

Die übrig bleibende Fläche innerhalb des vorab bearbeiteten Vorgewendebereichs wird dann üblicherweise in einzelnen Fahrgassen bearbeitet, die beispielsweise mäanderförmig hin- und hergehen können, oder auch in einem anderen Muster über die zu schwadende Fläche gelegt werden können. In jedem Fall dient dabei der vorher bearbeitete Vorgewendebereich als Umkehrplatz für den Schwader bzw. zum Anfahren der nächsten Fahrgasse.

Dabei kommt es beim Übergang zwischen zu schwadender Fläche und dem bereits bearbeiteten Vorgewendebereich des Öfteren zu einem unsauberen Ablegen des Schwads bzw. zu einem unsauberen Aufnehmen des noch verstreut auf dem Boden liegenden Ernteguts. Um im Vorgewende eng wenden zu können und/oder den dort liegenden Schwad nicht zu beschädigen, wird der ganze Schwader oder zumindest eine Schwadeinheit oder auch nur ein Teil der Schwadeinheit, der in einen schon liegenden Schwad einstechen bzw. darüber kratzen könnte, üblicherweise ausgehoben, was dazu führen kann, dass am Ende einer Fahrgasse beim Erreichen des Vorgewendebereichs das Ausheben zu früh erfolgt, sodass noch Erntegut ohne geschwadet zu sein am Boden liegen bleibt oder zu spät ausgehoben wird, sodass sich die Schwadbildung noch in den Vorgewendebereich hinein fortsetzt bzw. Erntegut ungewollt in den an sich bereits sauber bearbeiteten Vorgewendebereich gelegt wird.

Umgekehrt kann es beim Beginnen einer neuen Fahrgasse bei zu spätem Absenken dazu kommen, dass bei zu spätem Absenken der Anfangsbereich des noch verstreut in der Fahrgasse liegenden Ernteguts nicht erfasst und nicht geschwadet wird, während umgekehrt bei zu frühem Absenken bzw. zu früh einsetzendem Schwadvorgang noch an den Querfördermitteln befindliches Erntegut abgelegt wird, obwohl sich das Gerät noch im Vorgewendebereich befindet.

Die beschriebene Problematik verschärft sich insbesondere dann nochmals, wenn die Schwadeinheit als Merger ausgebildet ist, bei dem das zu schwadende Erntegut erst durch eine Aufnahmevorrichtung vom Boden aufgenommen und auf einem Querförderer abgelegt wird, welcher dann das übergebene Erntegut quer versetzt und in einem Schwad ablegt bzw. an eine nachgeordnete Querfördereinheit übergibt, die dann in einem Schwad ablegt. Solche Merger benötigen eine durchaus signifikante Zeitspanne, um das Erntegut erst vom Boden aufzunehmen, auf den Querförderer zu übergeben, quer zu versetzen und dann wieder im Schwad abzulegen, insbesondere auch dann, wenn mehrere Querförderer hintereinander geschaltet sind und am ersten Querförderer aufgenommenes Erntegut bis zum letzten Querförderer quer versetzt muss, bevor es abgelegt werden kann. Dies macht es noch schwerer, die Schwadeinheit bei Erreichen des Vorgewendes im richtigen Zeitpunkt abzuschalten bzw. in die Vorgewendestellung zu verbringen oder umgekehrt beim Ansteuern einer neuen Fahrgasse im richtigen Zeitpunkt abzusenken und anzuschalten.

Im Stand der Technik wurde bezüglich solcher Merger bereits vorgeschlagen, die Fördergeschwindigkeit des Querförderers am Ende einer Fahrgasse zu variieren, um trotz ungleichmäßig werdender Erntegutaufnahme einen dennoch gleichmäßig breiten bzw. dicken Schwad abzulegen. Die Schrift EP 25 20 156 B1 beschreibt einen solchen Merger, dessen Schwadeinheiten am Vorgewende ausgehoben werden sollen. Dabei wird vorgeschlagen, die Fördergeschwindigkeit des Querförderers einer Schwadeinheit, die ausgehoben wird, zu erhöhen, um trotz der durch das Ausheben geringer werdenden Aufnahmemenge zusammen mit der von der anderen Schwadeinheit her kommenden Erntegutmenge immer noch einen gleichmäßigen, in der gewünschten Linie abgelegten Schwad zu erzielen.

Die Schrift EP 25 20 155 A1 beschreibt einen ähnlichen Merger, bei dem ebenfalls beim Ausheben der Schwadeinheit am Vorgewende die Fördergeschwindigkeit des Querförderers erhöht werden soll, um trotz nachlassender Aufnahmemenge einen immer noch gleichmäßig dicken Schwad abzulegen.

Die Schrift EP 32 51 484 B1 zeigt ferner einen Schwader, bei dem die mehreren, nebeneinander angeordneten Schwadeinheiten nacheinander ausgehoben werden sollen, wenn die Schwadeinheiten beispielsweise durch ein schräges Anfahren des Vorgewendebereichs letzteren nicht gleichzeitig erreichen oder nur eine der Schwadeinheiten in einen bereits bearbeiteten Feldbereich einfährt.

Ferner zeigt die Schrift US 6,971,225 B1 einen Merger mit einer Pickup zum Aufnehmen von Erntegut vom Boden und einem Querförderer zum Querversetzen des aufgenommenen Ernteguts, wobei eine Aushubvorrichtung den Merger anheben und absenken kann und in einem speziellen Betriebsmodus Erntegut auch bei abgeschaltetem Querförderer aufgesammelt werden kann.

Der vorliegenden Erfindung liegt die Aufgabe zugrunde, einen verbesserten Schwader der eingangs genannten Art sowie ein verbessertes Verfahren zu dessen Steuerung zu schaffen, die Nachteile des Standes der Technik vermeiden und letzteren in vorteilhafter Weise weiterbilden. Insbesondere soll auch am Ende bzw. am Beginn einer neuen Fahrgasse eine saubere Schwadablage bei gleichzeitig vollständigem Zusammenrechen des noch verstreut auf dem Boden liegenden Ernteguts erreicht werden.

Erfindungsgemäß wird die genannte Aufgabe durch einen Schwader gemäß Anspruch 1 sowie ein Verfahren gemäß Anspruch 13 gelöst. Bevorzugte Ausgestaltungen der Erfindung sind Gegenstand der abhängigen Ansprüche.

Es wird also vorgeschlagen, das Abschalten der Fördermittel, die das Erntegut quer versetzen, und das Ausheben beim Erreichen des Ende einer Fahrgasse nicht mehr gleichzeitig auszuführen bzw. beim Erreichen einer neuen Fahrgasse das Anschalten der Querfördermittel und das Absenken der Schwadeinheit nicht gleichzeitig auszuführen. Erfindungsgemäß besitzt die Steuervorrichtung des Schwaders einen Vorgewende-Steuermodus, in dem zum Beenden eines laufenden Schwadbearbeitungszyklus zunächst bei in Arbeitsposition befindlicher Schwadeinheit der Fördermittelantrieb abgeschaltet und/oder stillgesetzt wird und erst nach einem vorbestimmten Zeit- und/oder Wegversatz später die Aushubvorrichtung zum Ausheben der Schwadeinheit betätigt wird. Zum Beginnen eines neuen Schwadbearbeitungszyklus kann umgekehrt zunächst die Aushubvorrichtung betätigt und die Schwadeinheit in die Arbeitsposition abgesenkt werden, um dann erst nach Ablauf eines vorbestimmten Zeit- und/oder Wegversatzes den Fördermittelantrieb zu starten und hierdurch das Querversetzen des Ernteguts und/oder dessen Ablegen in einem Schwad zu starten. Durch das zeit- und/oder wegversetzte Abschalten und/oder Starten des Querförderantriebs einerseits und des Aushebens und/oder Absenkens andererseits kann einerseits ein vollständiges Bearbeiten des noch auf dem Boden verstreut liegenden Ernteguts erreicht und andererseits eine ungewollte Schwadablage in einem nicht gewünschten Feldbereich vermieden werden. Dabei können die Fördermittel, die das aufgenommene Erntegut querversetzen, als Zwischenspeicher genutzt werden.

Während eine Aufnahmevorrichtung noch oder schon wieder arbeiten und am Boden liegendes Erntegut aufnehmen kann, bleibt an den nicht arbeitenden Fördermitteln befindliches Erntegut dort zwischengespeichert. Insbesondere können die stillgesetzten Fördermittel daran zwischengespeichertes Erntegut über den Vorgewendebereich beispielsweise beim Wenden zwischen zwei Fahrgassen mitnehmen.

Der Zeit- und/oder Wegversatz zwischen Abschalten des Querförderantriebs und Ausheben des relevanten Schwadeinheit-Teils bzw. zwischen Absenken und Einschalten kann grundsätzlich in verschiedener Weise bestimmt werden, wobei verschiedene Betriebs- und/oder Feldbearbeitungsparameter berücksichtigt werden können. Zwar wäre es möglich, einen festen Zeitversatz und/oder eine feste Wegstrecke vorzugeben, insbesondere unter der Annahme, dass zumindest näherungsweise beim Schwaden mit näherungsweise ähnlichen Parametereinstellungen gefahren wird, insbesondere näherungsweise ähnlichen Fahrgeschwindigkeiten und ähnlichen Fördermittelantriebsgeschwindigkeiten. Allerdings kann es vorteilhaft sein, den genannten Zeitversatz und/oder Wegversatz variabel einzustellen, um verschiedene Maschinenbetriebs- und/oder Feldbearbeitungsparameter berücksichtigen zu können.

Beispielsweise kann der genannte Zeit- und/oder Wegversatz in Abhängigkeit der Fahrgeschwindigkeit des Schwaders variabel eingestellt werden, beispielsweise dergestalt, dass mit zunehmend größerer Fahrgeschwindigkeit der genannte Zeitversatz und/oder Wegversatz vergrößert wird, um sicherzustellen, dass einerseits beim Annähern an ein Ende einer Fahrgasse der Querförderer rechtzeitig abgeschaltet und trotzdem das am Boden liegende Erntegut noch vollständig bearbeitet wird. Umgekehrt könnte der genannte Zeitversatz und/oder Wegversatz mit zunehmender Fahrgeschwindigkeit aber auch verkleinert werden, um der Überlegung Rechnung zu tragen, dass bei rechtzeitig abgeschaltetem Querförderantrieb die noch zu bearbeitende Fläche mit verstreutem Erntegut schneller überfahren wird. Grundsätzlich sind auch andere Abhängigkeiten von der Fahrgeschwindigkeit möglich, beispielsweise dergestalt, dass der Zeitversatz vergrößert und der Wegversatz verkleinert oder umgekehrt der Zeitversatz verkleinert und der Wegversatz vergrößert wird, wenn die Fahrgeschwindigkeit zunimmt oder abnimmt.

Alternativ oder zusätzlich kann der genannte Zeitversatz und/oder Wegversatz aber auch in Abhängigkeit der Fördergeschwindigkeit der Querfördermittel zum Versetzen des Ernteguts variabel eingestellt werden, beispielsweise dergestalt, dass bei höheren Querfördergeschwindigkeiten der Zeitversatz und/oder der Wegversatz vergrößert wird, um die Querförderwirkung mit dann zunehmend größerer Wurfweite rechtzeitig abzustellen, wenn das Ende einer Fahrgasse erreicht wird. Umgekehrt könnte der genannte Zeitversatz und/oder Wegversatz aber auch verkleinert werden, wenn die Querfördergeschwindigkeit erhöht oder abgesenkt wird.

Alternativ oder zusätzlich kann der genannte Zeitversatz und/oder Wegversatz aber auch in Abhängigkeit einer Eigenschaft des zu schwadenden Ernteguts variiert werden, beispielsweise in Abhängigkeit des Ernteguttyps und/oder der Erntegutfeuchtigkeit, beispielsweise je nachdem, ob trockenes Heu oder feuchtes Gras oder lang- oder kurzhalmiges Erntegut aus dem ersten oder zweiten Schnitt geschwadet werden soll. Alternativ oder zusätzlich kann auch die Menge und/oder das Volumen und/oder die Dicke bzw. Höhe des auf dem Boden liegenden Ernteguts Eingang finden in die Festlegung des Zeitversatzes und/oder des Wegversatzes, beispielsweise dergestalt, dass bei einem geringvolumigen Erntegutteppich ein kleinerer Zeit- und/oder Wegversatz als bei einem großvolumigen Erntegutteppich vorgesehen werden, wobei aber auch eine umgekehrte Abhängigkeit umgesetzt werden kann. Ferner beispielsweise kann bei feuchtem Erntegut wie Gras, das kompakter eingesammelt und abgelegt werden kann, als dies bei beispielsweise trockenem Heu der Fall ist, ein geringerer oder auch größerer Zeitversatz und/oder Wegversatz sinnvoll sein als wie bei besagtem trockenem Heu.

Zumindest einer oder auch mehrere oder alle der genannten Betriebs- und/oder Feldbearbeitungsparameter können vorteilhafterweise mittels einer geeigneten Sensorik erfasst und an die Steuervorrichtung gemeldet werden, welche dann vollautomatisch den Zeitversatz und/oder Wegversatz einstellen kann. Alternativ ist auch eine halbautomatische Anpassung des genannten Zeitversatzes und/oder Wegversatzes möglich, beispielsweise dergestalt, dass einem Maschinenführer für verschiedene Maschinenparameter Wahlmöglichkeiten vorgegeben werden, beispielsweise dergestalt, dass auf einer Anzeigeeinrichtung, beispielsweise einem Touchscreen die Auswahloption "Erntegut: trocken -feucht" angeboten und ausgewählt werden kann, woraufhin dann die Steuervorrichtung in Abhängigkeit der getroffenen Auswahl bzw. Eingabe zu einem Parameter die Einstellung in vorbestimmter Weise vornimmt.

Das Initiieren des genannten Vorgewende-Betriebsmodus, der dann das zeitversetzte Abschalten des Förderantriebs und Ausheben in die Vorgewendestellung bzw. umgekehrt das Absenken in die Arbeitsstellung und Anschalten des Förderantriebs vorsieht, kann in verschiedener Weise gesteuert werden. Beispielsweise kann der genannte Vorgewende-Betriebsmodus manuell initiiert werden, beispielsweise vom Maschinenführer nach Gefühl, wenn das Ende einer Fahrgasse erreicht bzw. eine neue Fahrgasse begonnen wird. Alternativ oder zusätzlich kann aber auch eine automatisierte Initiierung erfolgen, insbesondere in Abhängigkeit eines Abstands des Schwaders vom Ende der Fahrgasse und/oder vom Beginn einer neuen Fahrgasse und/oder in Abhängigkeit der Fahrgeschwindigkeit. Beispielsweise kann ein GPS-Signal verarbeitet werden, um den Abstand vom Ende einer alten Fahrgasse und/oder vom Beginn einer neuen Fahrgasse zu bestimmen und/oder auch die Fahrgeschwindigkeit zu bestimmen. Alternativ oder zusätzlich kann eine Abstandsbestimmungseinrichtung aber auch sensorisch den Übergang zwischen noch unbearbeitetem Feldbereich, auf welchem verstreutes Erntegut liegt, und bereits bearbeitetem Feldbereich, insbesondere Vorgewendebereich erfassen und den Abstand hieraus berechnen. Vorteilhafterweise kann eine solche Abstandsbestimmungseinrichtung berührungslos arbeiten und den Abstand zur Übergangskante zwischen bearbeitetem und unbearbeitetem Feldbereich messen.

Bei einem solchermaßen automatischen Initiieren des zeitversetzten Abschaltens und Aushebens bzw. zeitversetzten Absenkens und Anschaltens kann auch der jeweils eingestellte Zeit- und/oder Wegversatz Berücksichtigung finden, beispielsweise dergestalt, dass bei einem länger eingestellten Zeitversatz der genannte Vorgewende-Betriebsmodus bei noch größerem Abstand vom Ende der alten Fahrgasse bzw. Beginn der neuen Fahrgasse initiiert wird.

Die zumindest eine Schwadeinheit kann grundsätzlich verschieden ausgebildet sein. Die das Erntegut querversetzenden Fördermittel können in vorteilhafter Weiterbildung der Erfindung in Form zumindest eines Bandförderers mit einem endlos umlaufenden, antreibbaren Förderband ausgebildet sein. Alternativ oder zusätzlich kann auch ein Walzenförderer mit einer oder mehreren hintereinander angeordneten, antreibbaren Förderwalzen und/oder ein Kettenförderer beispielsweise mit mehreren nebeneinander laufenden Förderketten und/oder ein Kratzbodenförderer vorgesehen sein, um das Erntegut quer zur Fahrtrichtung zu versetzen und als Schwad abzulegen und/oder auf einen weiteren Querförderer zu übergeben. Grundsätzlich können auch anders ausgebildete Querförderer vorgesehen sein, beispielsweise umlaufende Rechzinken und/oder Förderschnecken.

Dabei umfasst die Schwadeinheit erfindungsgemäß zumindest eine Aufnahmevorrichtung zum Aufnehmen von Erntegut vom Boden und Übergeben des aufgenommenen Ernteguts an den zuvor genannten Querförderer. Eine solche Aufnahmevorrichtung kann beispielsweise in Form einer Pickup ausgebildet sein und/oder eine umlaufende Stachelwalze aufweisen, um das Erntegut vom Boden aufzunehmen und an den Querförderer zu übergeben.

Je nach Ausbildung der Schwadeinheit kann es ausreichend sein, nur einen Teil der Schwadeinheit in die Vorgewendestellung auszuheben. Sind beispielsweise in der vorgenannten Weise ein Querförderer beispielsweise in Form eines Bandförderers und eine Aufnahmevorrichtung beispielsweise in Form einer rotierenden Pickup vorgesehen, kann es ausreichend sein, nur die Aufnahmevorrichtung auszuheben, um keine im Vorgewendebereich bereits abgelegten Schwaden oder in anderer Form auf dem Boden liegendes Erntegut zu beeinträchtigen. Alternativ kann aber auch die gesamte Schwadeinheit in die Vorgewende- und/oder Transportstellung angehoben werden, wobei insbesondere der Querförderer beispielsweise in Form eines Förderbands und eine diesem zugeordnete Aufnahmevorrichtung synchron zueinander ausgehoben werden können.

Das beschriebene Abschalten der Fördermittel kann nur das Abschalten des Querförderers meinen, während der Aufnahmeförderer grundsätzlich weiterlaufen kann. Grundsätzlich ist es aber auch möglich, auch die Aufnahmevorrichtung beispielsweise in Form der rotierenden Stachelwalze abzuschalten, insbesondere wenn diese durch die Aushubvorrichtung in die Vorgewendestellung ausgehoben ist.

In Weiterbildung der Erfindung kann der Schwader auch mehrere Schwadeinheiten aufweisen, die beispielsweise front- und heckseitig verteilt an einem Schlepper angebaut werden können. Insbesondere können aber auch zwei oder auch mehr als zwei Schwadeinheiten an einem gemeinsamen Maschinenrahmen angebaut und/oder über eine gemeinsame Anbauvorrichtung entweder heckseitig oder frontseitig an einem Schlepper angebaut werden.

Insbesondere können zumindest zwei Schwadeinheiten hintereinander geschaltet angeordnet sein, insbesondere derart, dass die Querfördermittel einer ersten Schwadeinheit das querversetzte Erntegut an die Fördermittel einer zweiten Schwadeinheit übergeben, welche das übergebene Erntegut weiter querfördert und dann in einem Schwad ablegen oder an einen weiteren Querförderer übergeben kann.

Alternativ oder zusätzlich können aber auch zwei Schwadeinheiten derart zusammenwirkend angeordnet sein, dass die Fördermittel der beiden Schwadeinheiten das jeweils querversetzte Erntegut in einem gemeinsamen Schwad zwischen den Schwadeinheiten ablegen.

Umfasst der Schwader mehrere Schwadeinheiten, kann die Steuervorrichtung für jede der Schwadeinheiten den genannten Vorgewende-Steuermodus anwenden, wobei bei Erreichen des Endes eines Schwadzyklus die Fördermittel mehrerer oder aller Schwadeinheiten gleichzeitig oder nacheinander abgeschaltet und dann nach Ablauf eines vorbestimmten Zeitversatzes und/oder Wegversatzes die Schwadeinheiten zumindest teilweise ausgehoben werden können. Umgekehrt kann bei Annähern bzw. Beginnen an einen neuen Schwadzyklus die Schwadeinheiten aller Schwadeinheiten gleichzeitig oder nacheinander in die Arbeitsstellung abgesenkt und sodann nach Ablauf eines vorbestimmten Zeitversatzes und/oder Wegversatzes ein Anschalten der Fördermittel der mehreren oder allen Schwadeinheiten gleichzeitig oder nacheinander erfolgen.

In vorteilhafter Weiterbildung der Erfindung können bei mehreren Schwadeinheiten zum Beenden eines Schwadzyklus am Feldende die das Erntegut jeweils querversetzenden Fördermittel der mehreren Schwadeinheiten abgeschaltet und sodann nach einem vorbestimmten Zeitversatz und/oder Wegversatz das Ausheben der Schwadeinheiten bewerkstelligt werden. In vorteilhafter Weiterbildung der Erfindung kann dabei ein Reversieren des Fördermittelantriebs vorgesehen werden, insbesondere für die Fördermittel, welche das Erntegut im Schwad abgelegt hatten, bevor sie stillgesetzt wurden. Durch ein Betreiben der Fördermittel in entgegengesetzter Richtung kann am Rand noch an den Fördermitteln verbliebenes und/oder hängendes Erntegut eingefangen und gesichert werden, um solches Erntegut nicht im Vorgewende bzw. über einer bereits bearbeiteten Fläche ungewollt zu verlieren.

Sind in der vorgenannten Weise mehrere Schwadeinheiten hintereinander geschaltet, sodass eine Schwadeinheit auf eine nachgeschaltete Schwadeinheit übergibt, kann es ausreichend sein, wenn nur die in der hintereinander geschalteten Reihe letzte Schwadeinheit in der genannten Weise reversiert wird, das heißt insbesondere die Schwadeinheit, die das querversetzte Erntegut im Schwad ablegt.

Umgekehrt kann beim Wiedereinsetzen bzw. beim Beginnen eines neuen Schwadzyklus zeitversetzt nach dem Absenken ein Einschalten der Fördermittel der mehreren Schwadeinheiten erfolgen. Vorteilhafterweise kann hierbei das Fördermittel, in dessen Richtung abgelegt wird, eine bestimmte Zeit und/oder einen bestimmten Weg früher eingeschaltet werden als das andere Fördermittel, in dessen Richtung nicht abgelegt wird, um einen gleichmäßigen Schwadanfang zu bekommen.

Die Erfindung wird nachfolgend anhand eines bevorzugten Ausführungsbeispiels und zugehöriger Zeichnungen näher erläutert. In den Zeichnungen zeigen:

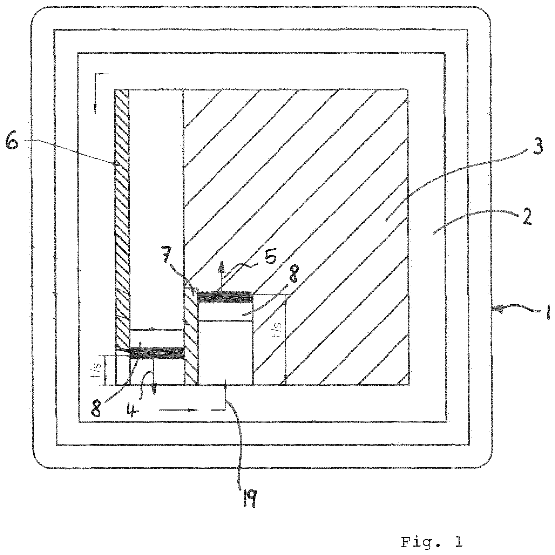

- Fig. 1:: eine schematische Draufsicht auf einen Schwader beim Schwaden eines Felds, wobei der Schwader in zwei nacheinander folgenden Fahrgassen gezeigt und ein Vorgewendebereich des Felds bereits bearbeitet ist, wobei in den beiden Fahrgassen der Zeit- und/oder Wegversatz zwischen Stillsetzen der Fördermittel und Ausheben der Schwadeinheit bzw. Absenken der Schwadeinheit und Wiederanschalten der Fördermittel dargestellt ist, und

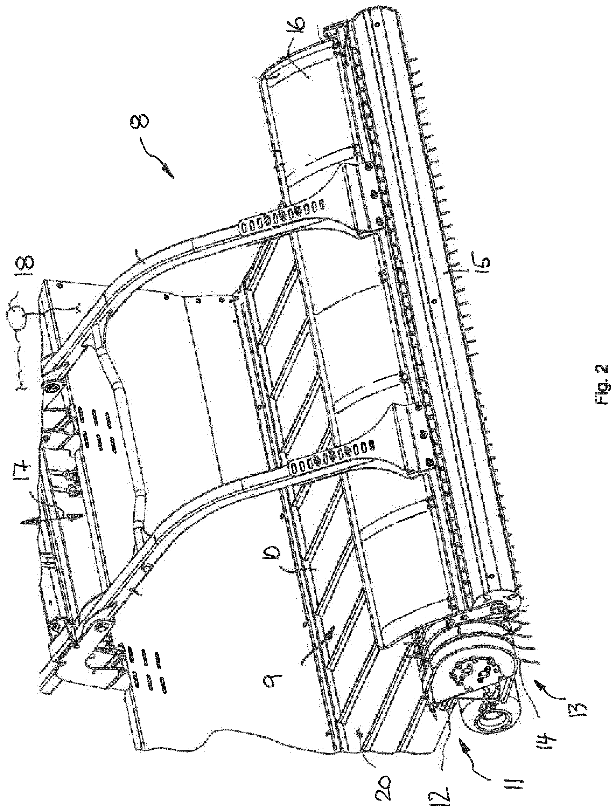

- Fig. 2:: eine perspektivische Darstellung einer Schwadeinheit in Form eines Mergers, bei dem eine Aufnahmevorrichtung in Form einer Pickup mit einer rotierenden Stachelwalze auf einen Querförderer in Form eines Bandförderers mit endlos umlaufendem Förderband ablegt.

Wie Figur 1 zeigt, kann beim Schwaden eines Felds 1 zunächst ein Vorgewendebereich 2 des Feldes 1 an dessen Rändern bearbeitet werden, um sozusagen außen um den zentralen Bereich des Felds 1 herum Platz zu schaffen und später Wendevorgänge möglichst schonend ohne Befahren des liegenden Futters erledigen zu können. Beispielsweise können im Vorgewendebereich 2 zumindest ein oder auch mehrere Vorgewendeschwade entlang den Rändern des zu bearbeitenden Felds 1 abgelegt werden. Innerhalb des bearbeiteten Vorgewendebereichs 2 verbleibt die zu bearbeitende Fläche 3, die beispielsweise durch mäanderförmige Fahrgassen 4 und 5 bearbeitet werden kann, um nebeneinander liegende, beispielsweise gerad verlaufende Schwade 6 und 7 ablegen zu können.

Wie Figur 2 verdeutlicht, kann der Schwader 8 als Merger ausgebildet sein und/oder einen Querförderer 9 umfassen, der beispielsweise in Form eines Bandförderers mit einem endlos umlaufenden Förderband 10 ausgebildet sein kann, um Erntegut quer zur Fahrtrichtung versetzen und in einem Schwad am Ende des Querförderers 9 und/oder neben der Schwadeinheit 11 des Schwaders 8 ablegen zu können. Das Förderband 10 bildet Fördermittel zum Querversetzen des Ernteguts, wobei ein Fördermittelantrieb 12 beispielsweise einen hydraulischen oder elektrischen Antriebsmotor zum Antreiben des Förderbands 10 beispielsweise um eine Umlenkwalze aufweisen kann. Alternativ wäre es auch möglich, den Querförderer 9 über einen mechanischen Antriebsstrang vom Schlepper her anzutreiben.

Um das Erntegut vom Boden aufnehmen zu können, kann der Schwader 8 eine Aufnahmevorrichtung 13 aufweisen, die das aufgenommene Erntegut an den Querförderer 9 übergeben kann. Die genannte Aufnahmevorrichtung 13 kann beispielsweise eine rotatorisch antreibbare Stachelwalze 14 in Form einer Pickup umfassen, deren Rechzinken gesteuert oder ungesteuert entlang einer Bewegungsbahn um eine liegende, quer zur Fahrtrichtung verlaufende Achse umlaufen können. Wie Figur 2 zeigt, kann dem Stachelrotor 14 eine Förderhilfe beispielsweise umfassend eine Einlaufwalze 15 und/oder eine Leitfläche 16 zugeordnet sein, um das Erntegut verlässlich aufnehmen und gezielt auf das Förderbahn 10 übergeben zu können.

Der genannte Schwader 8 kann an einem Maschinenrahmen höhenverstellbar gelagert und durch eine Aushubvorrichtung 17 in eine Vorgewendestellung angehoben und/oder in eine Transportstellung verbracht werden. Der genannte Maschinenrahmen kann über eine Anlenkvorrichtung an einem nicht gezeigten Schlepper angebaut werden, beispielsweise über eine Dreipunkt-Anlenkung und/oder auch aufgesattelt am Boden abgestützt sein. In der genannten Vorgewendestellung ist die Aufnahmevorrichtung 13 so weit vom Boden angehoben, dass am Boden liegendes Erntegut und/oder ein bereits zusammengerechter Schwad beim Überfahren vom Stachelrotor 14 nicht erfasst werden.

Das Ausheben in die Vorgewende- und/oder Transportstellung kann dabei durch translatorisches Anheben und/oder auch durch Nachobenschwenken bzw. Nachobenklappen erfolgen, was insbesondere auch dann vorteilhaft sein kann, wenn seitlich auskragende Schwadeinheiten 11 in eine breitenreduzierte Transportstellung zu verbringen sind, in welcher sich das Förderband 10 beispielsweise in einer aufrechten Stellung befinden kann.

Der Fördermittelantrieb 12 zum Antreiben des Förderbands 10 und die genannte Aushubvorrichtung 17 können durch eine Steuervorrichtung 18 angesteuert werden, die beispielsweise elektronisch ausgebildet, insbesondere einen Prozessor und einen Programmspeicher aufweisen kann, wobei die genannte Steuervorrichtung 18 mit einer Sensorik zusammenarbeiten kann, welche relevante Betriebsparameter und/oder Feldbearbeitungsparameter erfassen kann, wie eingangs erläutert.

Wie Figur 1 verdeutlicht, kann die Steuervorrichtung 18 am Ende der zu bearbeitenden Fläche bzw. bei Erreichen des Endes einer Fahrgasse zunächst den Fördermittelantrieb 12 und damit das Förderband 10 stillsetzen, obwohl der Schwader 8 noch in seiner abgesenkten Arbeitsstellung weiterfährt und die Aufnahmevorrichtung 13 noch abgesenkt ist und/oder noch arbeitet. Noch aufgenommenes Erntegut wird auf dem Förderband 10 abgelegt, welches insofern als Zwischenspeicher dienen kann.

Nach Ablauf einer vorbestimmten Zeitspanne und/oder einer vorbestimmten Wegstrecke wird dann später der Schwader 8 insgesamt in die Vorgewendestellung ausgehoben oder zumindest die Aufnahmevorrichtung 13 in die Vorgewendestellung ausgehoben. Das Ausheben kann insbesondere erst dann erfolgen, wenn die Fahrgasse zu Ende bearbeitet worden ist, um kein Erntegut im inneren Feldbereich 3 liegen zu lassen.

Bei abgeschaltetem Querförderer 9 und dann ausgehobenem Schwader 8 bzw. ausgehobener Aufnahmevorrichtung 13 kann der Schwader 8 wenden, wie dies der Pfeil 19 verdeutlicht, um sodann eine neue Fahrgasse und einen neuen Schwadzyklus zu beginnen. Dabei wird noch auf dem Förderband 10 liegendes Erntegut, welches durch das vorzeitige Abschalten nicht mehr abgelegt wurde, beim Wendevorgang bzw. über den Vorgewendebereich 2 mit transportiert.

Nach Ausführen des Wendevorgangs, wie ihn der Pfeil 19 verdeutlicht, bzw. beim Beginnen eines neuen Schwadbearbeitungszyklus veranlasst die Steuervorrichtung 18 zunächst das Absenken des Schwaders 8 bzw. zumindest der Aufnahmevorrichtung 13, damit die Aufnahmevorrichtung 13 rechtzeitig bei Erreichen des noch unbearbeiteten Flächenbereichs 3 dort liegendes Erntegut aufnehmen kann. Erst nach Verstreichen eines vorbestimmten Zeitversatzes t und/oder eines vorbestimmten Wegversatzes s nach dem Absenken der Aufnahmevorrichtung 13 veranlasst die Steuervorrichtung 18 das Wiedereinschalten des Förderbandes 10, indem der Fördermittelantrieb 12 wieder in Gang gesetzt wird.

Wie Figur 1 verdeutlicht, kann der Zeitversatz und/oder Wegversatz beim Beenden eines Schwadbearbeitungszyklus bzw. am Ende einer Fahrgasse von dem Zeitversatz und/oder Wegversatz beim Anfangen eines neuen Schwadbearbeitungszyklus bzw. am Anfang einer neuen Fahrgasse abweichen, beispielsweise kleiner sein als der Zeit- und/oder Wegversatz beim Beginnen einer neuen Fahrgasse, vgl. Figur 1.

Der genannte Zeitversatz und/oder Wegversatz kann beim Beenden einer Fahrgasse aber auch derselbe sein wie beim Beginnen einer neuen Fahrgasse.

Unabhängig hiervon kann der genannte Zeitversatz t und/oder Wegversatz s in der eingangs näher erläuterten Weise in Abhängigkeit verschiedener Maschinenbetriebs- und/oder Feldbearbeitungsparameter variiert werden.

Das Initiieren des beschriebenen Vorgewende-Steuermodus mit dem charakteristischen Zeitversatz zwischen Abschalten und Anheben bzw. Absenken und Wiedereinschalten kann in der ebenfalls bereits eingangs detailliert erläuterten Weise manuell und/oder automatisiert gesteuert werden, insbesondere in Abhängigkeit einer erfassten Position des Schwaders 8 relativ zum Rand der zu bearbeitenden Fläche 3 und/oder eines bestimmten oder erfassten Abstandes des Schwaders 8 vom Rand der zu bearbeitenden Fläche 3 und/oder in Abhängigkeit einer Fahrgeschwindigkeit.

Insbesondere kann der Vorgewende-Steuermodus so initiiert und der Zeitversatz und/oder Wegversatz so eingestellt werden, dass einerseits die Aufnahmevorrichtung 13 so lange abgesenkt bleibt bzw. so rechtzeitig abgesenkt wird, dass die zu bearbeitende Fläche 3 vollständig bearbeitet und dort liegendes Erntegut vollständig aufgenommen wird, und andererseits der Querförderer 9 hierzu zeitlich versetzt so rechtzeitig abgeschaltet bzw. erst so spät wieder eingeschaltet wird, dass kein auf dem Querförderer 9 befindliches Erntegut im Vorgewendebereich 2 abgelegt wird.

Umfasst der Schwader 8 mehrere Schwadeinheiten 11, die beispielsweise nebeneinander angeordnet und hintereinander geschaltet sein können und/oder miteinander zusammenarbeiten können, um einen gemeinsamen Schwad abzulegen, kann die Steuervorrichtung 18 die entsprechend mehreren Förderbänder 10 zeitversetzt und/oder wegversetzt vor dem Ausheben der Aufnahmevorrichtung 13 abschalten bzw. nach dem Absenken der Aufnahmevorrichtung 13 wieder einschalten.

Insbesondere kann es vorteilhaft sein, nach dem Abschalten eines schwadablegenden Förderbands 10 und dem Ausheben der Aufnahmevorrichtung 13 das abgeschaltete Förderband 10 wieder anzuschalten, allerdings in entgegengesetzter Förderrichtung, um am Ende bzw. Rand des Förderbands 10 liegendes bzw. hängendes Futter ein Stück weit zurückzufördern und wieder einzusammeln, um ein ungewolltes Verlieren im Vorgewendebereich 2 zu vermeiden.

Sind mehrere Schwadeinheiten 11 vorgesehen und in zusammenarbeitender Weise einander zugeordnet, kann es vorteilhaft sein, beim Beginnen einer neuen Fahrgasse bzw. beim Wiederbeginnen eines Schwadbearbeitungszyklus nach dem Absenken der Schwadeinheiten 11 das Förderband 10, in dessen Richtung abgelegt wird, einen vorbestimmten Zeitversatz und/oder einen vorbestimmten Wegversatz früher einzuschalten als das andere Förderband, in dessen Richtung nicht abgelegt wird, um einen gleichmäßigen Anfang des sich bildenden Schwads zu erzielen.

## Patentansprüche

1. Schwader in Form eines Mergers zum Schwaden von landwirtschaftlichem Erntegut, mit zumindest einer Schwadeinheit (11) umfassend eine Aufnahmevorrichtung (13) zum Aufnehmen des Ernteguts vom Boden sowie Fördermittel (20) mit einem Querförderer (9) zum Querversetzen des von der Aufnahmevorrichtung (13) übergebenen Ernteguts, einem Fördermittelantrieb (12) zum Antreiben der Fördermittel (20), einer Aushubvorrichtung (17) zum Ausheben zumindest der Aufnahmevorrichtung (13) der Schwadeinheit (11) in eine Vorgewende- und/oder Transportstellung, sowie einer Steuervorrichtung (18) zum Steuern des Fördermittelantriebs (12) und der Aushubvorrichtung (17), **dadurch gekennzeichnet, dass** die Steuervorrichtung (18) einen Vorgewende-Steuermodus besitzt, in dem
- zum Beenden eines laufenden Schwadbearbeitungszyklus zunächst der Fördermittelantrieb (12) und damit die Fördermittel (20) abgeschaltet und/oder stillgesetzt werden und erst nach einem vorbestimmten Zeit- und/oder Wegversatz (t, s) später die Aushubvorrichtung (17) zum Ausheben betätigt wird, und/oder
- zum Beginnen eines neuen Schwadbearbeitungszyklus zunächst bei abgeschalteten Fördermitteln (20) die Aushubvorrichtung (17) zum Absenken in die Arbeitsstellung betätigt wird und erst nach einem vorbestimmten Zeit- und/oder Wegversatz (t, s) später der Fördermittelantrieb (12) und damit die Fördermittel (20) eingeschaltet werden.

2. Schwader nach dem vorhergehenden Anspruch, wobei die Steuervorrichtung (18) dazu ausgebildet ist, den genannten Zeit- und/oder Wegversatz (t, s) in Abhängigkeit zumindest eines Betriebsparameters aus der Gruppe umfassend eine Fahrgeschwindigkeit des Schwaders, eine Fördergeschwindigkeit der Fördermittel (20) und einen Abstand des Schwaders (8) vom Rand der zu bearbeitenden Fläche (3) variabel einzustellen.

3. Schwader nach dem vorhergehenden Anspruch, wobei die Steuervorrichtung (18) dazu ausgebildet ist, bei höheren Fahrgeschwindigkeiten einen kleineren Zeitversatz (t) und/oder einen größeren Wegversatz (s) als für niedrigere Fahrgeschwindigkeiten vorzusehen.

4. Schwader nach einem der vorhergehenden Ansprüche, wobei die Steuervorrichtung (18) dazu ausgebildet ist, den Zeit- und/oder Wegversatz (t, s) in Abhängigkeit zumindest eines Feldbearbeitungsparameters aus der Gruppe umfassend Ernteguttyp, Erntegutfeuchte und Dicke des Erntegutteppichs variabel einzustellen.

5. Schwader nach einem der vorhergehenden Ansprüche, wobei die Steuervorrichtung (18) dazu ausgebildet ist, den genannten Vorgewende-Steuermodus in Abhängigkeit eines Startsignals automatisiert zu initiieren.

6. Schwader nach dem vorhergehenden Anspruch, wobei die Steuervorrichtung (18) dazu ausgebildet ist, das genannte Startsignal in Abhängigkeit zumindest eines Betriebsparameters aus der Gruppe umfassend den Abstand des Schwaders (8) vom Rand des zu bearbeitenden Feldbereichs (3) und die Fahrgeschwindigkeit des Schwaders (8) zu bestimmen.

7. Schwader nach einem der beiden vorhergehenden Ansprüche, wobei die Steuervorrichtung (18) eine Eingabevorrichtung zum manuellen Eingeben des Startsignals besitzt.

8. Schwader nach einem der vorhergehenden Ansprüche, wobei die Steuervorrichtung (18) dazu ausgebildet ist, nach Abschalten der Fördermittel (20) und nach Ausheben der Schwadeinheit (11) die Fördermittel (20) in reversierter Antriebsrichtung für eine begrenzte Zeitspanne und/oder eine begrenzte Förderstrecke wieder anzuschalten und dann wieder abzuschalten.

9. Schwader nach einem der vorhergehenden Ansprüche, wobei mehrere in einem gemeinsamen Schwad ablegende Schwadeinheiten (11) vorgesehen sind, wobei die Steuervorrichtung (18) dazu ausgebildet ist, im genannten Vorgewende-Steuermodus
- beim Beenden eines laufenden Schwadbearbeitungszyklus die Fördermittel (20) aller Schwadeinheiten (11) abzuschalten und erst nach einem vorbestimmten Zeitversatz und/oder Wegversatz (t, s) die Schwadeinheiten auszuheben, und/oder
- beim Beginnen eines neuen Schwadbearbeitungszyklus alle Schwadeinheiten (11) zunächst abzusenken in die Arbeitsposition und erst nach einem vorbestimmten Zeit- und/oder Wegversatz (t, s) die Fördermittel (20) der Schwadeinheiten (11) einzuschalten.

10. Schwader nach dem vorhergehenden Anspruch, wobei beim Beginnen eines neuen Schwadbearbeitungszyklus die Fördermittel (20) der Schwadeinheit (11), in deren Richtung der Schwad abgelegt wird, einen vorbestimmten Zeit- und/oder Wegversatz (t, s) früher eingeschaltet werden, als die Fördermittel (20) der anderen Schwadeinheit (11).

11. Schwader nach einem der vorhergehenden Ansprüche, wobei der Querförderer (9) ein endlos umlaufendes, antreibbares Förderband (10) aufweist.

12. Schwader nach einem der vorhergehenden Ansprüche, wobei die Aufnahmevorrichtung (13) einen umlaufend antreibbaren Stachelrotor (14) umfasst.

13. Verfahren zum Steuern eines Schwaders (8), der als Merger ausgebildet ist und eine Schwadeinheit (11) mit einer Aufnahmevorrichtung (13) zum Aufnehmen des Ernteguts vom Boden und Fördermitteln (20) umfassend einen Querförderer (9) zum Querversetzen des von der Aufnahmevorrichtung (13) übergebenen Ernteguts, einen Fördermittelantrieb (12) sowie eine Aushubvorrichtung (17) zum Ausheben zumindest der Aufnahmevorrichtung (13) der Schwadeinheit (11) in eine Vorgewende- und/oder Transportstellung aufweist, **dadurch gekennzeichnet, dass**
- zum Beenden eines laufenden Schwadbearbeitungszyklus zunächst der Fördermittelantrieb (12) und damit die Fördermittel (20) abgeschaltet und/oder stillgesetzt werden und erst nach einem vorbestimmten Zeit- und/oder Wegversatz (t, s) später die Aushubvorrichtung (17) zum Ausheben betätigt wird, und/oder
- zum Beginnen eines neuen Schwadbearbeitungszyklus zunächst bei abgeschalteten Fördermitteln (20) die Aushubvorrichtung (17) zum Absenken in die Arbeitsstellung betätigt wird und erst nach einem vorbestimmten Zeit- und/oder Wegversatz (t, s) später der Fördermittelantrieb (12) und damit die Fördermittel (20) eingeschaltet werden.

14. Verfahren nach dem vorhergehenden Anspruch, wobei während des vorbestimmten Zeit- und/oder Wegversatzes (t, s) eine Aufnahmevorrichtung (13) zum Aufnehmen des Ernteguts vom Boden und Übergeben an die genannten Fördermittel (20) weiter betrieben werden und dabei vom Boden aufgenommenes und an die Fördermittel (20) übergebenes Erntegut an den stillgesetzten Fördermitteln (20) zwischengespeichert wird.

## Claims

1. Windrower in the form of a merger for windrowing agricultural crop, having at least one windrowing unit (11) comprising a pick-up device (13) for picking up crop from the ground and conveyor means (20) having a transverse conveyor (9) for transversely displacing the crop transferred from the pick-up device (13), a conveyor drive (12) for driving the conveyor means (20), a lifting device (17) for lifting at least the pick-up device (13) of the windrowing unit (11) into a headland and/or transport position, and a control device (18) for controlling the conveyor drive (12) and the lifting device (17), **characterised in that** the control device (18) has a headland control mode, in which
- the conveyor drive (12) and thus the conveyor means (20) are first switched off and/or stopped to end a current windrowing cycle and only after a predetermined time delay and/or distance offset (t, s) is the lifting device (17) later actuated for lifting out, and/or
- to start a new windrowing cycle, the lifting device (17) is first actuated for lowering into the working position with the conveyor means (20) switched off and the conveyor drive (12) and thus the conveyor means (20) are only switched on later after a predetermined time delay and/or distance offset (t, s).

2. Windrower according to the preceding claim, wherein the control device (18) is designed to variably set the said time delay and/or distance offset (t, s) as a function of at least one operating parameter from the group comprising a travelling speed of the windrower, a conveying speed of the conveyor means (20) and a distance of the windrower (8) from the edge of the surface (3) to be worked.

3. Windrower according to the preceding claim, wherein the control device (18) is designed to provide a smaller time offset (t) and/or a larger distance delay (s) at higher travelling speeds than at lower travelling speeds.

4. Windrower according to the preceding claim, wherein the control device (18) is designed to variably adjust the time delay and/or distance offset (t, s) as a function of at least one field working parameter from the group comprising crop type, crop moisture and thickness of the crop carpet.

5. Windrower according to any one of the preceding claims, wherein the control device (18) is designed to automatically initiate the said headland control mode as a function of a start signal.

6. Windrower according to the preceding claim, wherein the control device (18) is designed to determine said start signal as a function of at least one operating parameter from the group comprising the distance of the windrower (8) from the edge of the field area (3) to be worked and the travelling speed of the windrower (8).

7. Windrower according to any one of the two preceding claims, wherein the control device (18) has an input device for manually entering the start signal.

8. Windrower according to any one of the preceding claims, wherein the control device (18) is designed to switch the conveyor means (20) on again for a limited period of time and/or a limited conveying distance and then switch them off again after the conveyor means (20) have been switched off and the windrowing unit (11) has been lifted.

9. Windrower according to any one of the preceding claims, wherein a plurality of windrowing units (11) deposited in a common windrow are provided, wherein in said headland control mode, the control device (18) is designed to
- switch off the conveyor means (20) of all windrowing units (11) at the end of a running windrowing cycle and to lift the windrowing units only after a predetermined time delay and/or distance offset (t, s), and/or
- first lower all windrowing units (11) into the working position at the start of a new windrowing cycle and only switch on the conveyor means (20) of the windrowing units (11) after a predetermined time delay and/or distance offset (t, s).

10. Windrower according to the preceding claim, wherein at the start of a new windrowing cycle, the conveyor means (20) of the windrowing unit (11) in the direction of which the windrow is deposited are switched on at a predetermined time delay and/or distance offset (t, s) earlier than the conveyor means (20) of the other windrowing unit (11).

11. Windrower according to any one of the two preceding claims, wherein the transverse conveyor (9) has an endlessly circulating, drivable conveyor belt (10).

12. Windrower according to any one of the two preceding claims, wherein the pick-up device (13) comprises a circulating, drivable spiked rotor (14).

13. Method for controlling a windrower (8), which is designed as a merger and has a windrowing unit (11) having a pick-up device (13) for picking up crop from the ground and conveyor means (20) comprising a transverse conveyor (9) for transversely displacing the crop transferred from the pick-up device (13), a conveyor drive (12) and a lifting device (17) for lifting at least the pick-up device (13) of the windrowing unit (11) in a headland or transport position, **characterised in that**
- the conveyor drive (12) and thus the conveyor means (20) are first switched off and/or stopped to end a current windrowing cycle and only after a predetermined time delay and/or distance offset (t, s) is the lifting device (17) later actuated for lifting out, and/or
- to start a new windrowing cycle, the lifting device (17) is first actuated for lowering into the working position with the conveyor means (20) switched off and the conveyor drive (12) and thus the conveyor means (20) are only switched on later after a predetermined time delay and/or distance offset (t, s).

14. Method according to the preceding claim, wherein during the predetermined time delay and/or distance offset (t, s) a pick-up device (13) for picking up the crop from the ground and transferring it to the said conveyor means (20) continues to be operated, and crop picked up from the ground and transferred to the conveyor means (20) is temporarily stored at the conveyor means (20), which are at a standstill.

## Revendications

1. Andaineur sous la forme d'un andaineur à tapis destiné à l'andainage de récolte agricole, comportant au moins une unité d'andainage (11) comprenant un dispositif de ramassage (13) pour ramasser la récolte du sol ainsi que des moyens de transport (20) dotés d'un transporteur transversal (9) pour déplacer transversalement la récolte transmise par le dispositif de ramassage (13), un entraînement pour moyens de transport (12) pour entraîner les moyens de transport (20), un dispositif de soulèvement (17) pour soulever au moins le dispositif de ramassage (13) de l'unité d'andainage (11) dans une position de tournière et/ou de transport, ainsi qu'un dispositif de commande (18) pour commander l'entraînement pour moyens de transport (12) et le dispositif de soulèvement (17), **caractérisé en ce que** le dispositif de commande (18) possède un mode de commande en tournière, dans lequel
- pour terminer un cycle de traitement de l'andain en cours, l'entraînement pour moyens de transport (12) et ainsi les moyens de transport (20) sont d'abord mis hors service et/ou arrêtés, et le dispositif de soulèvement (17) est actionné plus tard pour le soulèvement seulement après un décalage de temps et/ou de distance (t, s) prédéfini, et/ou
- pour commencer un nouveau cycle de traitement de l'andain, le dispositif de soulèvement (17) est d'abord actionné, avec les moyens de transport (20) hors service, pour descendre dans la position de travail et l'entraînement pour moyens de transport (12) et ainsi les moyens de transport (20) sont mis en marche plus tard seulement après un décalage de temps et/ou de distance (t, s) prédéfini.

2. Andaineur selon la revendication précédente, dans lequel le dispositif de commande (18) est conçu pour régler de manière variable ledit décalage de temps et/ou de distance (t, s) en fonction d'au moins un paramètre de fonctionnement compris dans le groupe constitué d'une vitesse de marche de l'andaineur, d'une vitesse de transport des moyens de transport (20) et d'une distance de l'andaineur (8) par rapport au bord de la surface (3) à travailler.

3. Andaineur selon la revendication précédente, dans lequel le dispositif de commande (18) est conçu pour prévoir un décalage de temps (t) plus faible et/ou un décalage de distance (s) plus élevé pour des vitesses de marche plus élevées que pour des vitesses de marche plus faibles.

4. Andaineur selon l'une des revendications précédentes, dans lequel le dispositif de commande (18) est conçu pour régler de manière variable le décalage de temps et/ou de distance (t, s) en fonction d'au moins un paramètre de travail du champ compris dans le groupe constitué du type de récolte, de l'humidité de la récolte et de l'épaisseur du tapis de récolte.

5. Andaineur selon l'une des revendications précédentes, dans lequel le dispositif de commande (18) est conçu pour lancer automatiquement ledit mode de commande en tournière en fonction d'un signal de démarrage.

6. Andaineur selon la revendication précédente, dans lequel le dispositif de commande (18) est conçu pour déterminer ledit signal de démarrage en fonction d'au moins un paramètre de fonctionnement compris dans le groupe constitué de la distance de l'andaineur (8) par rapport au bord de la zone du champ (3) à travailler et de la vitesse de marche de l'andaineur (8).

7. Andaineur selon l'une des deux revendications précédentes, dans lequel le dispositif de commande (18) possède un dispositif de saisie pour la saisie manuelle du signal de démarrage.

8. Andaineur selon l'une des revendications précédentes, dans lequel le dispositif de commande (18) est conçu pour, après la mise hors service des moyens de transport (20) et après le soulèvement de l'unité d'andainage (11), remettre en marche puis mettre de nouveau hors service les moyens de transport (20) dans un sens d'entraînement inversé pour un laps de temps limité et/ou une distance de transport limitée.

9. Andaineur selon l'une des revendications précédentes, dans lequel plusieurs unités d'andainage (11) qui déposent en un andain commun sont prévues, le dispositif de commande (18) étant conçu pour, dans ledit mode de commande en tournière,
- lorsqu'il est mis fin à un cycle de traitement d'andain en cours, mettre hors service les moyens de transport (20) de toutes les unités d'andainage (11) et soulever les unités d'andainage seulement après un décalage de temps et/ou décalage de distance (t, s) prédéfini, et/ou
- lors du commencement d'un nouveau cycle de traitement d'andain, d'abord descendre toutes les unités d'andainage (11) dans la position de travail, et mettre en marche les moyens de transport (20) des unités d'andainage (11) seulement après un décalage de temps et/ou décalage de distance (t, s) prédéfini.

10. Andaineur selon la revendication précédente, dans lequel, lors du commencement d'un nouveau cycle de traitement d'andain, les moyens de transport (20) de l'unité d'andainage (11) dans la direction de laquelle l'andain est déposé sont mis en marche avant les moyens de transport (20) de l'autre unité d'andainage (11) avec un décalage de temps et/ou décalage de distance (t, s) prédéfini.

11. Andaineur selon l'une des revendications précédentes, dans lequel le transporteur transversal (9) présente une bande de transport (10) pouvant être entraînée et tournant sans fin.

12. Andaineur selon l'une des revendications précédentes, dans lequel le dispositif de ramassage (13) comprend un rotor à dents (14) pouvant être entraîné en rotation.

13. Procédé de commande d'un andaineur (8) qui est conçu sous la forme d'un andaineur à tapis et qui présente une unité d'andainage (11) comportant un dispositif de ramassage (13) pour ramasser la récolte du sol et des moyens de transport (20) comprenant un transporteur transversal (9) pour déplacer transversalement la récolte transmise par le dispositif de ramassage (13), un entraînement pour moyens de transport (12) ainsi qu'un dispositif de soulèvement (17) pour soulever au moins le dispositif de ramassage (13) de l'unité d'andainage (11) dans une position de tournière et/ou de transport, **caractérisé en ce que**
- pour terminer un cycle de traitement de l'andain en cours, l'entraînement pour moyens de transport (12) et ainsi les moyens de transport (20) sont d'abord mis hors service et/ou arrêtés, et le dispositif de soulèvement (17) est actionné plus tard pour le soulèvement seulement après un décalage de temps et/ou de distance (t, s) prédéfini, et/ou
- pour commencer un nouveau cycle de traitement de l'andain, le dispositif de soulèvement (17) est d'abord actionné, avec les moyens de transport (20) hors service, pour descendre dans la position de travail et l'entraînement pour moyens de transport (12) et ainsi les moyens de transport (20) sont mis en marche plus tard seulement après un décalage de temps et/ou de distance (t, s) prédéfini.

14. Procédé selon la revendication précédente, dans lequel, pendant le décalage de temps et/ou décalage de distance (t, s) prédéfini, un dispositif de ramassage (13) pour ramasser la récolte du sol et la transmettre auxdits moyens de transport (20) continue à être exploité et la récolte alors ramassée sur le sol et transmise aux moyens de transport (20) est stockée temporairement sur les moyens de transport (20) arrêtés.
